# EUROPÄISCHE PATENTSCHRIFT

(11) **EP 2 729 395 B1**
(45) Veröffentlichungstag und Bekanntmachung des Hinweises auf die Patenterteilung: **16.08.2017**
(21) Anmeldenummer: 12725330.0
(22) Anmeldetag: 02.06.2012
(51) Int. Cl.: B65G 17/00, B65G 47/86, B65G 47/84

(54) **TRANSPORTEUR**
CONVEYOR
CONVOYEUR

(30) Priorität: 05.07.2011 DE 102011106761
(43) Veröffentlichungstag der Anmeldung: 14.05.2014
(73) Patentinhaber: KHS GmbH, 44143 Dortmund (DE)
(72) Erfinder: NIEHR, Thomas, 55583 Bad Münster am Stein Ebernburg (DE); VORWERK, Jürgen, 56290 Mörsdorf (DE)
(86) Internationale Anmeldenummer: PCT/EP2012/002351
(87) Internationale Veröffentlichungsnummer: WO 2013/004324

(56) Entgegenhaltungen:
- EP-A1- 1 106 545
- EP-A1- 2 123 580
- WO-A1-00/37353
- WO-A1-01/42113
- DE-A1- 4 131 699
- DE-U1- 29 821 746
- JP-A- 04 341 422
- US-A- 5 630 679
- US-A1- 2010 077 703

## Beschreibung

Die Erfindung bezieht sich auf einen Transporteur gemäß Oberbegriff Patentanspruch 1 und dabei speziell auf einen Lineartransporteur zum getakteten bzw. schrittweisen Transportieren von Behältern, die an einem die jeweilige Behälteröffnungen aufweisenden Behälterbereich (Neck) hängend gehalten in einem wenigstens einspurigen Behälterstrom schrittweise entlang einer Transportstrecke bewegt werden.

Lineartransporteure sind insbesondere auch als Bestandteil von Behälterbehandlungsmaschinen bekannt (EP 1 081 068 B1, EP 1 220 787 B1), wobei die Behälter für ihre Behandlung an verschiedenen in Transportrichtung auf einander folgenden Behandlungsstationen oder -positionen getaktet, d.h. schrittweise entlang der Transportstrecke bewegt werden, und zwar vorzugsweise an jeweils einem Behälterflansch hängend gehalten und in einem mehrspuringen Behälterstrom. Aufgrund der getakteten Transportbewegung neigen die hängend gehaltenen Behälter zu einem Schaukeln oder Pendeln um horizontale und senkrecht zur Transportrichtung orientierte Achsen. Hierdurch wird die Prozesssicherheit beeinträchtigt und es besteht u.a. auch die Gefahr, dass nach dem Füllen der Behälter Füllgut aus den noch nicht geschlossenen schaukelnden Behältern schwappt, was dann zu einer Verunreinigung und ggs. auch zu einer höchst unerwünschten Verkeimung der betreffenden Anlage oder Vorrichtung mit dem verschwappten oder verspritzten Füllgut als Nährgrund für Keime führt. Das Dokument DE 298 21 746 U1 bezieht sich auf einer Vorrichtung zum Transport von Flaschen das aber eine andere Konstruktion , z.B. bezüglich der Formgestaltung der Nutöffnungen offenbart.

Aufgabe der Erfindung ist, es, einen Transporteur aufzuzeigen, bei dem bei geringem konstruktivem Aufwand ein durch die getaktete oder schrittweise Bewegung verursachtes Pendeln oder Schaukeln der hängend gehaltenen Behälter vermieden wird. Zur Lösung dieser Aufgabe ist ein Transporteur entsprechend dem Patentanspruch 1 ausgebildet.

Durch die Niederhalter- und Abstützelemente, die an den Behälteraufnahmen bzw. an den Rändern der Nuten vorgesehen sind und zusätzliche Anlageflächen für die der jeweiligen Behältermündung zugewandte Seite der Behälterflansche bilden, wird das durch die getaktete Bewegung verursachtes Schaukeln oder Pendeln der Behälter wirksam vermieden. Zugleich ist der Transporteur aber auch hinsichtlich seiner Behälteraufnahmen sehr einfach so ausgestaltet, dass insbesondere auch ein Einführen und Ausführen der Behälter in bzw. aus den Behälterausnahmen möglich ist. Zusätzlich zu den Behälterträgern sind keine weiteren Elemente erforderlich, die mit diesen Behälterträgern synchron mitbewegt werden und das Pendeln oder Schaukeln verhindern. Die Niederhalter- und Abstützelemente sind unmittelbar an den Behälterträgern oder an den die Behälteraufnahmen bildenden Elementen der Behälterträger vorgesehen und/oder fest mit den Behälterträgern bzw. mit diesen Elementen verbunden. Vorzugsweise sind die Niederhalter- oder Abstützelemente einstückig mit den Behälterträgern oder mit die Behälteraufnahmen bildenden Elementen ausgeführt.

"Behälter" sind im Sinne der Erfindung insbesondere solche, die unterhalb ihrer Behälteröffnung oder -mündung mit einem überstehenden Behälterflansch ausgebildet sind, z.B. Behälter oder Flaschen aus Kunststoff, beispielsweise aus PET.

Unter "Lineartransporteur" ist dabei im Sinne der Erfindung insbesondere ein Transporteur zu verstehen, der die zwischen einem Behältereinlauf und einem Behälterauslauf gebildete Transportstrecke zumindest in einem Teilbereich einen geradlinigen Verlauf besitzt, d.h. für einen linearen Transport der Behälter ausgebildet ist.

Der Ausdruck "im Wesentlichen" bedeutet im Sinne der Erfindung Abweichungen von jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in sehr vereinfachter schematischer Darstellung und in Draufsicht einen Transporteur zum Transportieren von Behältern in Form von Flaschen;
- Fig. 2: in einer perspektivischen Teildarstellung eines der Transportelemente des Transporteurs der Figur 1 zusammen mit einem an einer Behälteraufnahme dieses Transportelementes hängend gehaltenen Behälter;
- Fig. 3: in vergrößerter Darstellung ein Detail der Figur 2; Fig. 4 in vergrößerter Teildarstellung eine Draufsicht auf eines der Transportelemente, zusammen mit einem Behälter;
- Fig. 5: einen Schnitt entsprechend der Linie I - I der Figur 4;
- Fig. 6: einen Schnitt entsprechend der Linie II - II der Figur 4.

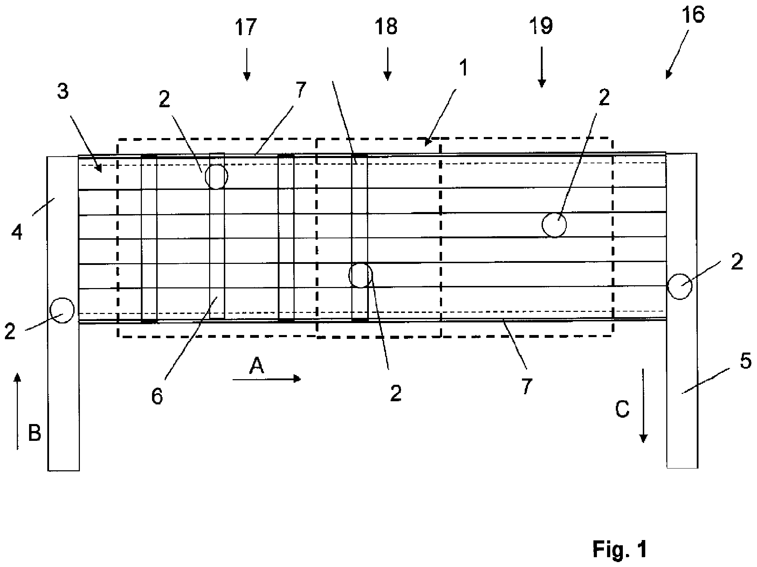

Der in der Figur 1 allgemein mit 1 bezeichnete und als Lineartransporteur ausgebildete Transporteur dient zum Transportieren von mit ihren Behälterachsen BA vertikal oder im Wesentlichen vertikal orientierten Behältern 2 in einem mehrspurigen Behälterstrom, d.h. bei der dargestellten Ausführungsform in einem sechsspurigen Behälterstrom, entlang einer linearen Transportstrecke 3, und zwar in einer Transportrichtung A. Die Behälter 2 werden der Transportstrecke 3 über einen Behältereinlauf 4 entsprechend dem Pfeil B zugeführt und an dem bezogen auf die Transportrichtung A rückwärtigen Ende der Transportstrecke 3 über einen Behälterauslauf entsprechend dem Pfeil C abgeführt.

Im Detail ist der Transporteur 1 für einen getakteten bzw. schrittweisen Transport ausgebildet, wobei die Behälter 2 mit einem unterhalb ihrer Behältermündung 2.1 an einem Behälterhals 2.2 ausgebildeten Behälterflansch 2.3 während des Transportes hängend gehalten sind. Hierfür weist der Transporteur 1 bei der dargestellten Ausführungsform eine Vielzahl von beispielsweise plattenförmigen Behälterträger 6 auf, die mit ihrer Längserstreckung horizontal oder im Wesentlichen horizontal und senkrecht oder im Wesentlichen senkrecht zur Transportrichtung A orientiert sind und in der Transportrichtung A getaktet bzw. schrittweise entlang der Transportstrecke 3 bewegt werden. Die Behälterträger 6 sind beidendig jeweils an einem eine geschlossene Schlaufe bildenden, mit der Schlaufenebene parallel zur Transportrichtung orientierten und endlos getaktet bzw. schrittweise angetriebenen Transportelement 7 befestigt, beispielsweise in Form einer Transportkette oder eines Transportriemens.

Die Behälterträger 6 sind jeweils mit mehreren Behälteraufnahmen 8 versehen, und zwar mit jeweils einer Behälteraufnahmen 8 für jede Spur des mehrspurigen Behälterstromes. Bei der dargestellten Ausführungsform sind Behälteraufnahmen 8 jeweils von einer Nut 9 gebildet, die u.a. an der bezogen auf die Transportrichtung A vorauseilenden Längsseite des Behälterträgers 6 offen (Nutenöffnung 10) und an dem der Nutenöffnung 10 gegenüberliegenden Seite geschlossen ist. Weiterhin ist jede Nut 9 so ausgeführt, dass sie von einer Oberseite 6.1 bis na eine Unterseite 6.2 des Behälterträgers 6 reicht und ihr Rand 11 ausgehend von der Nutenöffnung 10 einen ersten, gekrümmten und an der Innenseite der Nut 9 konkaven Randabschnitt 11.1, daran anschließend einen kreisbogenförmig oder im Wesentlichen kreisbogenförmigen Randabschnitt 11.2, der auch das geschlossene Ende der Nut 9 definiert, und daran anschließend einen an der Nutenöffnung 10 endenden Randabschnitt 11.3 aufweist, der bei der dargestellten Ausführungsform geradlinig oder im Wesentlichen geradlinig ausgebildet ist. Die Krümmungsachsen der Randabschnitte 11.1 und 11.2 sind jeweils vertikale oder im Wesentlichen vertikale Achsen, d.h. Achsen, die senkrecht zur der Oberseite 6.1 und/oder Unterseite 6.2 der Behälterträger 6 orientiert sind.

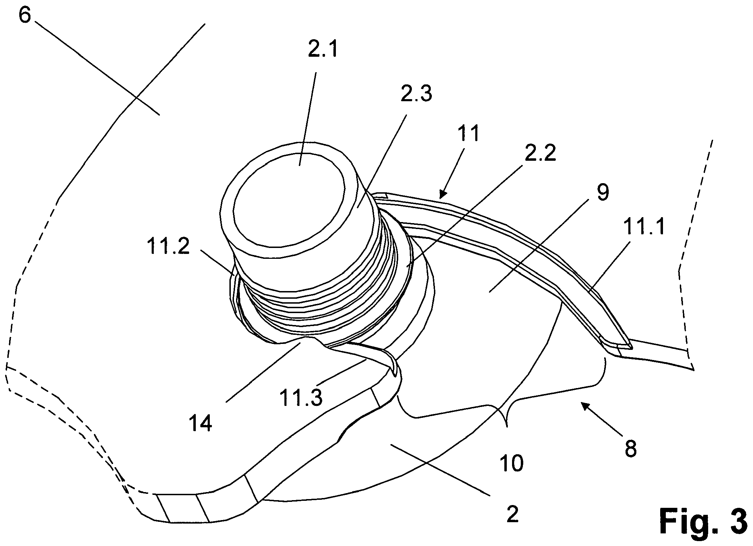

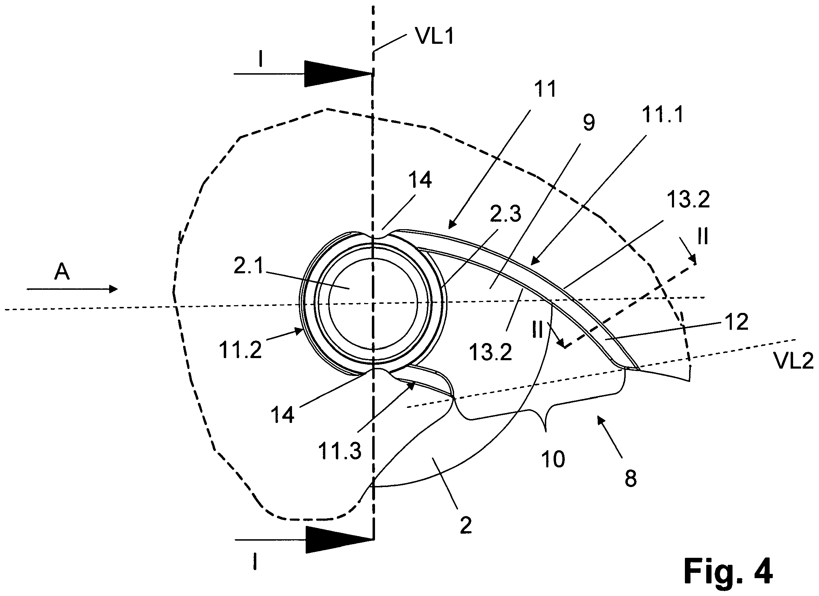

Wie insbesondere die Figuren 3 und 4 zeigen, sind die die Behälteraufnahmen 8 bildenden Nuten 9 weiterhin so ausgeführt, dass der Randabschnitt 11.1 eine deutlich größere Länge als der Randabschnitt 11.3 aufweist, d.h. die bezogen auf die Transportrichtung A vorauseilende Längsseite der Behälterträger 6 an den Randabschnitten 11.3 jeweils entgegen der Transportrichtung A zurückgesetzt ausgebildet ist. Durch die beschriebene Ausbildung des Randes 11 wird u.a. das Einbringen und Ausbringen der Behälter 2 in bzw. aus den Behälteraufnahmen 8 verbessert, d.h. insbesondere wird hierdurch ein bezogen auf die Transportrichtung A seitliches Ein- und Ausbringen der Behälter 2 begünstigt.

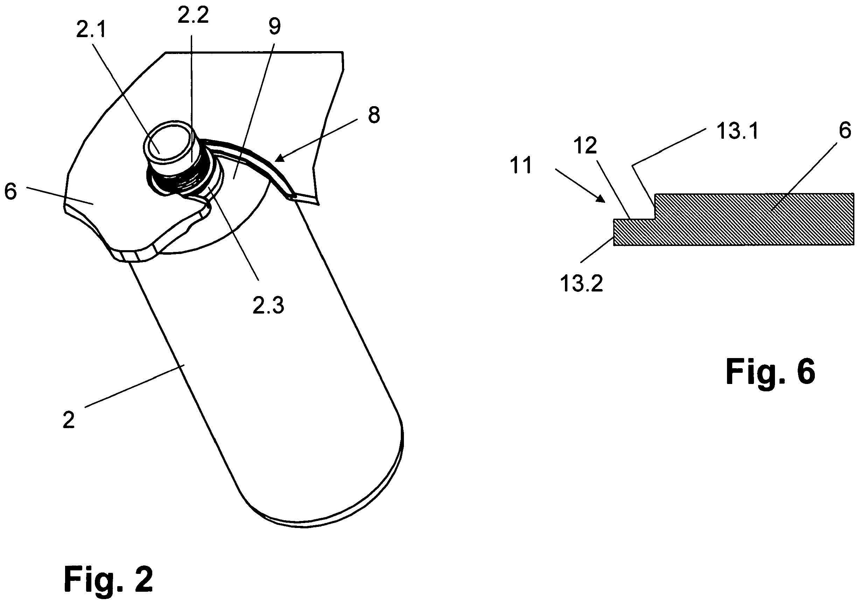

An dem Rand 11 der Behälteraufnahmen 8 sind die Behälter 2 mit ihrem Behälterflansch 2.3 jeweils hängend gehalten. Hierfür ist der jeweilige Rand 11 an allen Randabschnitten 11.1 - 11.3 entsprechend der Figur 6 stufenförmig ausgebildet, und zwar derart, dass entlang des gesamten Randes 11 auf einem Niveau zwischen der Oberseite 6.1 und der Unterseite 6.2 des Behälterträgers 6 eine Auflagefläche 12, auf der der jeweilige Behälterflansch 2.3 aufliegt, und senkrecht hierzu orientierte seitliche Abstützflächen 13.1 und 13.2 gebildet sind, und zwar als seitliche Anlage für den Behälterflansch 2.3 (obere Abstützfläche 13.1) und den Behälterhals (untere Abstützflächen 13.2).

Während des Transportes sind die Behälter 2 in den Behälteraufnahmen 8 derart angeordnet, dass der jeweilige Behälterhals 2.2 und Behälterflansch 2.3 gegen den kreisbogenförmigen Randabschnitt 11.2 , d.h. gegen die Anlagefläche 12 und die Abstützflächen 13.1 und 13.2 oder aber einen geringfügigen Abstand von den Abstützflächen 13.1 und 13.2 aufweisen, beispielsweise einen Abstand in der Größenordnung von 0,5mm bis 1,0mm.

Die Besonderheit des Transporteurs 1 bzw. der Behälterträger 6 besteht darin, dass die Behälteraufnahmen 8 bzw. die diese Aufnahmen bildenden Nuten 9 zusätzlich mit Niederhalter- und Abstützelementen bzw. mit Niederhaltern 14 ausgestattet sind, die gegen die der Behältermündung 2 zugewandte Oberseite des jeweiligen Behälterflansches 2.3 anliegen, sodass im Bereich jedes Niederhalters 14 der betreffende Behälterflansch 2.3 zwischen dem Niederhalter 14 und der Auflagefläche 12 aufgenommen ist. Hierdurch wird ein durch die getaktete Transportbewegung bedingtes Schaukeln der Behälter 2 während des Transportes vermieden oder zumindest stark reduziert wird.

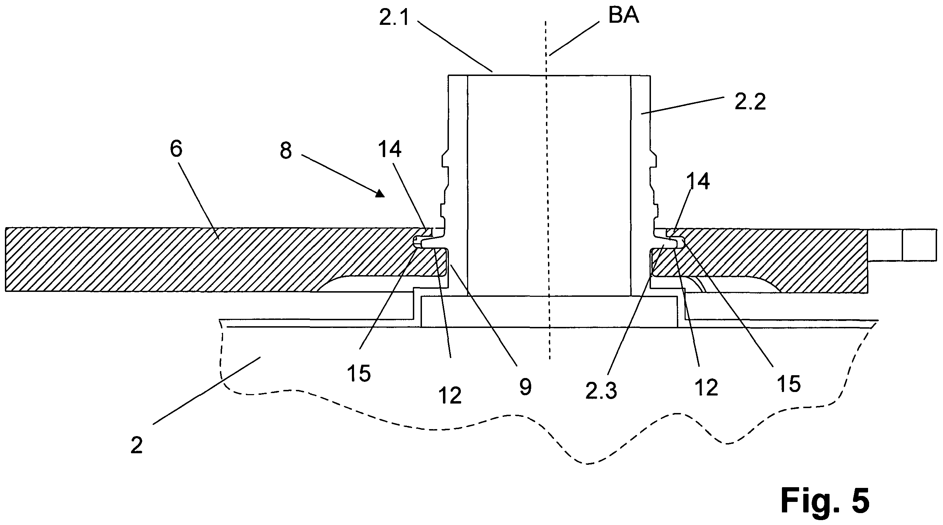

Bei der dargestellten Ausführungsform sind die Niederhalter 14 jeweils von Nasen gebildet, die sich an der Behälterträgeroberseite 6.1 ausgehend von der seitlichen Anlagefläche 13.1 über einen Teil der Breite der Auflagefläche 12 erstrecken und zwischen sich und der Auflagefläche 12 einen jeweiligen Behälterflansch 2.3 aufnehmenden Spalt 15 bilden (Figur 5).

Die jeweils eine zusätzliche Anlagefläche für die der Behältermündung 2.1 zugewandte Seite des Behälterflansches 2.3 bildenden nasenartigen Niederhalter 14 sind bei der dargestellten Ausführungsform jeweils so vorgesehen, dass jede Behälteraufnahme 8 zwei Niederhalter 14 aufweist, die im Bereich der Enden des Randabschnitts 11.2 vorgesehen sind. Die beiden Niederhalter 14 jeder Behälteraufnahme 8 sind in einer Achsrichtung parallel oder im Wesentlichen parallel zur Längserstreckung des Behälterträgers 6 und damit in einer Achsrichtung senkrecht oder im Wesentlichen senkrecht zur Transportrichtung A einander gegenüberliegend an der Nut 9 angeordnet, und zwar bei der dargestellten Ausführungsform in der Weise, dass die Verbindungslinie VL1 zwischen den beiden Niederhaltern 14 jeder Behälteraufnahme 8 seitlich gegenüber der Krümmungsachse des Randabschnitts 11.2 versetzt ist, und zwar in Richtung zur Nutenöffnung 10 bzw. zu der in Transportrichtung vorauseilenden Längsseite des Behälterträgers 6. Gegenüber dem geschlossenen Ende der jeweiligen Ausnehmung oder Nut 9 ist die Verbindungslinie VL1 um einen Betrag in Transportrichtung A versetzt ist, der größer ist als der halbe Außendurchmesser des Behälterhalses 2.2 oder größer ist als die halbe Breite, die die Ausnehmung oder Nut 9 an ihrem geschlossenen Ende besitzt, vorzugsweise um einen Faktor im Bereich zwischen 1,015 und 1,035, beispielsweise etwa um einen Faktor 1,03.

Durch die von den nasenartigen Niederhaltern 14 gebildeten zusätzlichen Anlagenflächen für die der Behältermündung 2.1 zugewandte Seite des jeweiligen Behälterflansches 2.3 wird im zusammenwirken mit der vorbeschriebenen versetzten Anordnung der Verbindungslinie VL1 nicht nur das Schaukeln der Behälter 2 während des getakteten Transportes vermieden, sondern auch erreicht, dass die Kippenergie des jeweiligen Behälters 2 dazu genutzt wird, den Behälterflansch 2.3 in seiner Sollposition in der Behälteraufnahme 8 zu halten bzw. in diese Sollposition an geschlossenen Ende der Nut 9 zurück zu bringen.

Die Niederhalter 14 sind beispielsweise so ausgebildet, dass die Breite, die der jeweilige Spalt 15 in vertikaler Richtung aufweist, etwa 0,2 mm größer ist als die Dicke des Behälterflansches 2.3.

Bei der dargestellten Ausführungsform ist der Transporteur 1 Bestandteil einer Vorrichtung oder Anlage 16 zum Behandeln der Behälter 2, beispielsweise einer Vorrichtung oder Anlage zum Füllen der Behälter 2 mit einem Füllgut und zum anschließenden Verschließen der gefüllten Behälter 2. Entlang der Transportstrecke 3 sind dementsprechend mehrere Behandlungsabschnitte vorgesehen, die in der Transportrichtung A aufeinander folgen, und zwar ein Abschnitt 17 zum Vorbehandeln der Behälter 2, beispielsweise zum Spülen und/oder Desinfizieren und/oder Sterilisieren der Behälter 2, ein Abschnitt 18 zum Füllen der Behälter 2 mit dem Füllgut sowie ein Abschnitt 19 zum Verschließen der gefüllten Behälter 2.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

Vorstehend wurde davon ausgegangen, dass die die Behälteraufnahmen 8 bildenden Nuten 9 in den Behälterträgern 6 ausgebildet sind in der praktischen Ausführung des Transporteurs 1 sind aber die Behälterträger 6 zweckmäßiger Weise jeweils mehrteilig ausgeführt, und zwar beispielsweise zumindest bestehend aus jeweils einem beidendig an einem Transportelement 7 gehaltenen Tragelement, an dem dann mehrere jeweils eine Behälteraufnahme 8 bzw. eine Nut 9 bildende Einzelelemente, vorzugsweise auch austauschbar befestigt sind.

### Bezugszeichenliste

- 1: Transporteur
- 2: Behälter
- 2.1: Behältermündung
- 2.2: Behälterhals
- 2.3: Behälterflansch
- 3: Transportstrecke
- 4: Behältereinlauf
- 5: Behälterauslauf
- 6: Behälterträger
- 7: Transportelement
- 8: Behälteraufnahme
- 9: Nut
- 11: Rand
- 11.1 - 11.3: Randabschnitt
- 12: Auflagefläche
- 13.1, 13.2: seitliche Anlage- oder Abstützfläche
- 14: Niederhalter
- 15: Spalt
- 16: Behandlungsmaschine
- 17-19: Abschnitt
- A, B, C: Transportrichtung der Behälter 2
- BA: Behälterachse
- VL1, VL2: Verbindungslinie

## Patentansprüche

1. Transporteur zum hängenden Transportieren von Behältern (2) entlang einer zumindest teilweise linearen Transportstrecke (3) in einem zumindest einspurigen Behälterstrom und in einer Transportrichtung (A), mit mehreren jeweils wenigstens eine Behälteraufnahme (8) aufweisenden Behälterträger (6), wobei die Behälterträger (6) mit ihrer Längserstreckung horizontal und senkrecht zur Transportrichtung (A) orientiert sind und von wenigstens einem Antrieb oder Transportelement (7) in der Transportrichtung (A) schrittweise oder getaktet bewegbar sind, wobei die Behälterträger (6) beidendig jeweils an einem eine geschlossene Schlaufe bildenden, mit der Schlaufenebene parallel zur Transportrichtung (A) orientierten und endlos getaktet bzw. schrittweise angetriebenen Transportelement (7) befestigt sind, wobei die Behälteraufnahmen (8) jeweils von die Behälter (2) an einem Behälterbereich (2.2) unterhalb ihrer Behältermündungen (2.1) aufnehmenden Ausnehmungen oder Nuten (9) gebildet sind, die an einem Rand Auflageflächen (12) für jeweils einen Behälterflansch (2.3) für eine an den Auflageflächen (12) hängende Halterung der Behälter (2) bilden und wobei die die Behälteraufnahmen (8) bildenden Ausnehmungen oder Nuten (9) jeweils an einem bezogen auf die Transportrichtung (A) vorderen Nutenende eine Nutöffnung (10) zum Einbringen und Ausbringen der Behälter (2) in und aus den Behälteraufnahmen (8) aufweisen und an einem bezogen auf die Transportrichtung (A) rückwärtigen Ende geschlossen sind, **dadurch gekennzeichnet, dass**
die jeweilige Nutöffnung (10) einen ersten, gekrümmten und an der Innenseite der Nut (9) konkaven Randabschnitt (11.1), daran anschließend einen das rückwärtige Ende bildenden kreisbogenförmigen Randabschnitt (11.2) und daran anschließend einen an der Nutöffnung (10) endenden geradlinig ausgebildeten Randabschnitt (11.3) aufweist,
dass die Behälterträger (6) an den Behälteraufnahmen (8) mit wenigstens zwei Niederhalter- und/oder Abstützelement (14) ausgebildet sind, die Anlage- oder Abstützflächen für die der jeweiligen Behältermündung (2.1) zugewandte Seite der Behälterflansche (2.3) bilden und dass die wenigstens zwei Niederhalter- und Abstützelement (14) einstückig mit dem jeweiligen Behälterträger (6) hergestellt sind, wobei die jeweilige Behälteraufnahme (8) oder die diese Behälteraufnahme bildende Ausnehmung oder Nut (9) an ihrem Rand (11) stufenförmig ausgebildet ist,
und dass die wenigstens zwei Niederhalter- und Abstützelemente (14) an zwei einander gegenüberliegenden Bereichen des Randes der Behälteraufnahme (8) oder der diese Behälteraufnahme bildenden Ausnehmung oder Nut (9) vorgesehen sind.

2. Transporteur nach Anspruch 1, **dadurch gekennzeichnet, dass** das wenigstens eine Niederhalter- und/oder Abstützelement (14) mit der gegenüberliegenden Auflagefläche (12) einen Spalt (15) für eine zumindest teilweise Aufnahme des jeweiligen Behälterflansches (2.3) bildet.

3. Transporteur nach Anspruch 2, **dadurch gekennzeichnet, dass** der zwischen dem wenigstens einen Niederhalter- und Abstützelement (14) und dem Auflagebereich (12) gebildete Spalt (15) geringfügig größer ist, beispielsweise um 0,2 mm größer ist, als die Dicke des in diesem Spalt (15) aufnehmbaren Behälterflansches (2.3).

4. Transporteur nach Anspruch 1, **dadurch gekennzeichnet, dass** die wenigstens zwei Niederhalter- und Abstützelemente (14) jeder Behälteraufnahme (8) auf einer gedachten Verbindungslinie (VL1) angeordnet sind, die senkrecht oder im Wesentlichen senkrecht zur Transportrichtung (A) orientiert ist und vorzugsweise gegenüber dem geschlossenen Ende (11.2) der jeweiligen Ausnehmung oder Nut (9) um einen Betrag in Transportrichtung (A) versetzt ist, der größer ist als die halbe Breite, die die Ausnehmung oder Nut (9) an ihrem geschlossenen Ende besitzt, vorzugsweise um einen Faktor im Bereich zwischen 1,015 und 1,035, beispielsweise etwa um einen Faktor 1,03.

5. Transporteur nach einem der vorhergehenden Ansprüche, **dadurch gekennzeichnet, dass** eine gedachte Verbindungslinie (VL2), die die Enden des Randes der jeweiligen Behälteraufnahme (8) oder der Ausnehmung oder Nut (9) verbindet, mit der Achse der Transportrichtung (A) einen spitzen Winkel einschließt, der sich entgegen der Transportrichtung öffnet.

6. Transporteur nach einem der vorhergehenden Ansprüche, **dadurch gekennzeichnet, dass** jede Behältereufnahme (8) oder jede diese Behälteraufnahme (9) bildende Ausnehmung oder Nut (9) so ausgebildet ist, dass ein Ende des Randes (11) der Behälteraufnahme (8) oder der Ausnehmung oder Nut (9) an der Öffnung (10) der Behälteraufnahme (8) dem anderen Ende des Randes (11) bezogen auf die Transportrichtung (A) vorauseilt, und dass vorzugsweise zumindest ein an das eine Ende anschließende Randabschnitt (111) des Randes konkav gekrümmt ist.

7. Transporteur nach einem der vorhergehenden Ansprüche, **dadurch gekennzeichnet, dass** die Ausnehmungen oder Nuten (9) der Behälteraufnahmen (8) mit ihrem Rand (11) seitliche Anlageflächen (13.1, 13.2) bilden, und dass die Ausnehmungen oder Nuten (9) im Bereich dieser Anlageflächen (13,1, 13.2) Abmessungen aufweisen, die vorzugsweise geringfügig größer sind, beispielsweise um ca. 1 mm größer sind als der Außendurchmesser des dort aufnehmbaren Behälterflansches (2.3).

8. Transporteur nach einem der vorhergehenden Ansprüche, **dadurch gekennzeichnet, dass** der Bestandteil einer Behälterbehandlungsanlage (16), beispielsweise einer Anlage oder Vorrichtung zum Füllen und Verschließen der Behälter (2) ist.

## Claims

1. A transporter for the suspended transporting of containers (2) along an at least partially linear transport path (3) in an at least single-lane container flow and in a transport direction (A), having a plurality of container carriers (6) each comprising at least one container holder (8), with the container carriers (6) being oriented with their longitudinal extension horizontal and square to the transport direction (A) and able to be moved incrementally or cycled by at least one drive or transport element (7) in the transport direction (A), the container carriers (6) each being attached at both ends to a transport element (7) which forms a closed loop, is oriented with the loop plane parallel to the transport direction (A) and is endlessly cycled or incrementally driven, with the container holders (8) each being formed by recesses or grooves (9) accommodating the containers (2) at a container region (2.2) beneath their container mouths (2.1); on one edge, said recesses or grooves form support surfaces (12) each for a container flange (2.3) for a suspended holding of the containers (2) on the support surfaces (12), and with the recesses or grooves (9) which form the container holders (8) each comprising, at a front groove end when seen relative to the transport direction (A), a groove opening (10) for the introducing and removing the containers (2) into and out of the container holders (8) and being closed at a rear end when seen relative to the transport direction (A), **characterised in that** the respective groove opening (10) comprises a first, curved edge section (11.1) that is concave on the inside of the groove (9), followed by a circular-arc-shaped edge section (11.2) that forms the rear end and again followed by a straight edge section (11.3) ending at the groove opening (10), **in that** the container carriers (6) on the container holders (8) are configured with at least two holding-down and/or support elements (14) which form the contact or support faces for that side of the container flanges (2.3) which faces the respective container mouth (2.1), and **in that** the at least two holding-down and/or support elements (14) are produced as a single piece with the respective container carrier (6), with the respective container holder (8) or the recess or groove (9) forming this container holder being at its edge (11) stepped in configuration, and **in that** the at least two holding-down and/or support elements (14) are provided at two opposite regions of the edge of the container holder (8) or of the recess or groove (9) forming this container holder.

2. The transporter of claim 1 **characterised in that** the at least one hold-down and/or support element (14) forms a gap (15) with the opposite support surface (12) for an at least partial receiving of the respective container flange (2.3).

3. The transporter of claim 3 **characterised in that** the gap (15) formed between the at least one hold-down and support element (14) and the support surface (12) is slightly greater, for example 0.2 mm greater, than the thickness of the container flange (2.3) received in this gap (15).

4. The transporter of claim 1 **characterised in that** the at least two hold-down and support elements (14) of each container holder (8) are arranged on a notional connecting line (VL1) which is oriented square or substantially square to the transport direction (A) and which is preferentially offset in transport direction (A) relative to the closed end (11.2) of the respective recess or groove (9) by an amount greater than half the width which the recess or groove (9) comprises at its closed end, preferably by a factor ranging from 1.015 to 1.035, for example by a factor of around 1.03.

5. The transporter of any one of the preceding claims **characterised in that** a notional connecting line (VL2) which connects the ends of the edge of the respective container holder (8) or of the recess or groove (9) encloses with the axis of transport direction (A) an acute angle which opens contrary to the transport direction.

6. The transporter of any one of the preceding claims **characterised in that** each container holder (8) or each recess or groove (9) forming this container holder (9) is configured such that one end of the edge (11) of the container holder (8) or of the recess or groove (9) at the opening (10) of the container holder (8) is ahead of the other end of the edge (11) relative to the transport direction (A), and **in that** preferably at least one edge section (11.1) of the edge adjoining the one end is concavely curved.

7. The transporter of any one of the preceding claims **characterised in that** the recesses or grooves (9) of the container holders (8) form lateral contact surfaces (13.1, 13.2) with their edge (11), and **in that** the recesses or grooves (9) comprise - in the region of these contact surfaces (13.1, 13.2) - dimensions which are preferably slightly larger, for example approx. 1 mm larger, than the outside diameter of the container flange (2.3) which can be received therein.

8. The transporter of any one of the preceding claims **characterised in that** it is part of a container treatment installation (16), for example of an installation or device for the filling and sealing of the containers (2).

## Revendications

1. Transporteur servant à transporter de manière suspendue des contenants (2) le long d'un trajet de transport (3) au moins en partie linéaire dans un flux de contenants au moins à une voie et dans une direction de transport (A), avec plusieurs porte-contenants (8) présentant respectivement au moins un logement de contenant (8), dans lequel les porte-contenants (6) sont orientés par leur extension longitudinale de manière horizontale et de manière perpendiculaire par rapport à la direction de transport (A) et peuvent être déplacés de manière progressive ou de manière cadencée par au moins un entraînement ou un élément de transport (7) dans la direction de transport (A), dans lequel les porte-contenants (6) sont fixés au niveau des deux extrémités respectivement au niveau d'un élément de transport (7) formant une boucle fermée, orienté avec le plan de boucle de manière parallèle par rapport à la direction de transport (A) et entraîné sans fin de manière cadencée ou de manière progressive, dans lequel les logements de contenant (8) sont formés respectivement par des évidements ou des rainures (9) logeant les contenants (2) au niveau d'une zone de contenant (2.2) sous leurs embouchures de contenant (2.1), lesquels évidements ou lesquelles rainures forment, au niveau d'un bord, des surfaces de réception (12) pour respectivement une bride de contenant (2.3) pour un support des contenants (2) de manière suspendue au niveau des surfaces de réception (12) et dans lequel les évidements ou les rainures (9) formant les logements de contenant (8) présentent respectivement, au niveau d'une extrémité de rainure avant par rapport à la direction de transport (A), une ouverture de rainure (10) servant à introduire et à sortir les contenants (2) dans et hors des logements de contenant (8) et sont fermés/fermées au niveau d'une extrémité arrière par rapport à la direction de transport (A), **caractérisé en ce que**
l'ouverture de rainure (10) respective présente une première section de bord (11.1) courbée et concave au niveau du côté intérieur de la rainure (9), s'y raccordant, une section de bord (11.2) en forme d'arc de cercle, formant l'extrémité arrière et, s'y raccordant, une section de bord (11.3) réalisée de manière rectiligne se terminant au niveau de l'ouverture de rainure (10),
**que** les porte-contenants (6) sont réalisés au niveau des logements de contenant (8) avec au moins deux éléments formant des serre-flans et/ou éléments de soutien (14), forment les surfaces d'appui ou de soutien pour le côté, tourné vers l'embouchure de contenant (2.1) respective, de la bride de contenant (2.3), et que les au moins deux éléments formant des serre-flans et éléments de soutien (14) sont fabriqués d'un seul tenant avec le porte-contenant (6) respectif, dans lequel le logement de contenant (8) respectif ou l'évidement ou la rainure (9) formant ledit logement de contenant est réalisé/réalisée en forme de palier au niveau de son bord (11),
et que les au moins deux éléments formant des serre-flans et éléments de soutien (14) sont prévus au niveau de deux zones se faisant face l'une l'autre du bord du logement de contenant (8) ou de l'évidement ou de la rainure (9) formant ledit logement de contenant.

2. Transporteur selon la revendication 1, **caractérisé en ce que** l'au moins un élément formant un serre-flan et/ou élément de soutien (14) forme avec la surface de réception (12) faisant face à une fente (15) pour un logement au moins partiel de la bride de contenant (2.3) respective.

3. Transporteur selon la revendication 2, **caractérisé en ce que** la fente (15) formée entre l'au moins un élément formant un serre-flan et élément de soutien (14) et la zone de réception (12) est légèrement plus grande, par exemple de 0,2 mm que l'épaisseur de la bride de contenant (2.3) pouvant être logée dans ladite fente (15).

4. Transporteur selon la revendication 1, **caractérisé en ce que** les au moins deux éléments formant des serre-flans et éléments de soutien (14) de chaque logement de contenant (8) sont disposés sur une ligne de liaison (VL1) imaginaire, qui est orientée de manière perpendiculaire ou sensiblement de manière perpendiculaire par rapport à la direction de transport (A) et qui de préférence est décalée par rapport à l'extrémité (11.2) fermée de l'évidement respectif ou de la rainure respective (9) d'une valeur dans la direction de transport (A), qui est plus grande que la moitié de la largeur, que possède l'évidement ou la rainure (9) au niveau de son extrémité fermée, de préférence d'un facteur situé dans la plage comprise entre 1,015 et 1,035, par exemple environ d'un facteur de 1,03.

5. Transporteur selon l'une quelconque des revendications précédentes, **caractérisé en ce qu'**une ligne de liaison (VL2) imaginaire, qui relie les extrémités du bord du logement de contenant (8) respectif ou de l'évidement ou de la rainure (9), forme avec l'axe de la direction de transport (A) un angle aigu, qui s'ouvre à l'encontre de la direction de transport.

6. Transporteur selon l'une quelconque des revendications précédentes, **caractérisé en ce que** chaque logement de contenant (8) ou chaque évidement ou rainure (9) formant ledit logement de contenant (9) est réalisé/réalisée de telle sorte qu'une extrémité du bord (11) du logement de contenant (8) ou de l'évidement ou de la rainure (9) au niveau de l'ouverture (10) du logement de contenant (8) précède l'autre extrémité du bord (11) par rapport à la direction de transport (A), et que de préférence au moins une section de bord (11.1), située dans le prolongement d'une extrémité, du bord est courbée de manière concave.

7. Transporteur selon l'une quelconque des revendications précédentes, **caractérisé en ce que** les évidements ou rainures (9) des logements de contenant (8) forment avec leur bord (11) des surfaces d'appui (13.1, 13.2) latérales, et que les évidements ou rainures (9) présentent, dans la zone desdites surfaces d'appui (13.1, 13.2), des dimensions, qui sont de préférence légèrement plus grandes, par exemple plus grandes d'environ 1 mm que le diamètre extérieur de la bride de contenant (2.3) pouvant y être logée.

8. Transporteur selon l'une quelconque des revendications précédentes, **caractérisé en ce qu'**il fait partie intégrante d'une installation de traitement de contenants (16), par exemple d'une installation ou d'un dispositif servant à remplir et à fermer les contenants (2).
